# EUROPEAN PATENT APPLICATION

(11) **EP 0 858 183 A2**
(43) Date of publication of application: **12.08.1998**
(21) Application number: 98101885.6
(22) Date of filing: 04.02.1998
(51) Int. Cl.: H04L 9/00

(54) **Encryption & decryption apparatus**

(30) Priority: 06.02.1997 JP 23551/97
(71) Applicant: MATSUSHITA ELECTRIC INDUSTRIAL CO., LTD., Kadoma-shi, Osaka 571 (JP)
(72) Inventor: Yanagawa, Yoshifumi, Kyoto-shi, Kyoto 607 (JP); Kobayashi, Masaaki, Kawanishi-shi, Osaka 666-01 (JP); Matsumi, Chiyoko, Suita-shi, Osaka 565 (JP); Nagaoka, Yoshitomi, Neyagawa-shi, Osaka 572 (JP); Yoshida, Junji, Kyoto-shi, Kyoto 603 (JP)
(74) Representative: Kügele, Bernhard

(57) **Abstract**

In an encryption apparatus comprising; (a) a transmission-data-format-transformer which transforms transmission data into synchronous transmission data having a data format of a transmitting line, (b) an encrypting device which produces an encrypted synchronous transmission data by encrypting the synchronous transmission data with a transmission key for transmitting, (c) a transmission command processor which processes a transmission control signal, (d) a transmission admission device which outputs control information received from the transmission admission device as asynchronous data, and also admits the data to be transmitted, (e) a multiplexing device which multiplexes the encrypted synchronous data as well as asynchronous transmission data to output, a data encryption device for encrypting transmission data is provided by using a transmission key for data in order that the transmission admission device produces a transmission key for data responsive to the data content to be encrypted by the data encryption device. A decryption apparatus for decrypting the encrypted signal, and an encryption & decryption apparatus which combines the above encryption apparatus and the decryption apparatus are also available. Independent of encrypting a transmitting line, various depths of an encryption strength can be applied to data responsive to a data content arbitrary. As a result, a depth of encryption strength can be changeable according to a type and a content of transmission/reception data, and thus, an encryption method can be flexibly changeable depending on a type of video, or a compression method of video data.

## Description

### Field of the Invention

The present invention relates to a network-interface-apparatus which transmits audio data and video data via network to/from video devices as well as audio devices linked with a network. Specifically, the invention relates not only to an encryption with a transmission key for transmitting line but also an encryption apparatus which transforms audio data and video data to be transmitted onto the network into codes, as well as a decryption apparatus which transforms the data received from the network into audio data and video data.

### Background of the Invention

A business of distributing video data and audio data by using a CATV (cable television) or a communication satellite has been widely accepted. A set-top-box for receiving this service is one of a hot item in the market, and some AV (audio & video) devices with a network interface, such as home-use digital video camera, draw market's attention. When coupling these devices with a network, an encryption & decryption apparatus for video data and audio data is requested because a copyright should be protected and a charge should be properly dealt with.

Japanese Patent Unexamined Publication No. H06-125554 discloses some prior arts relating to an encryption & decryption apparatus.

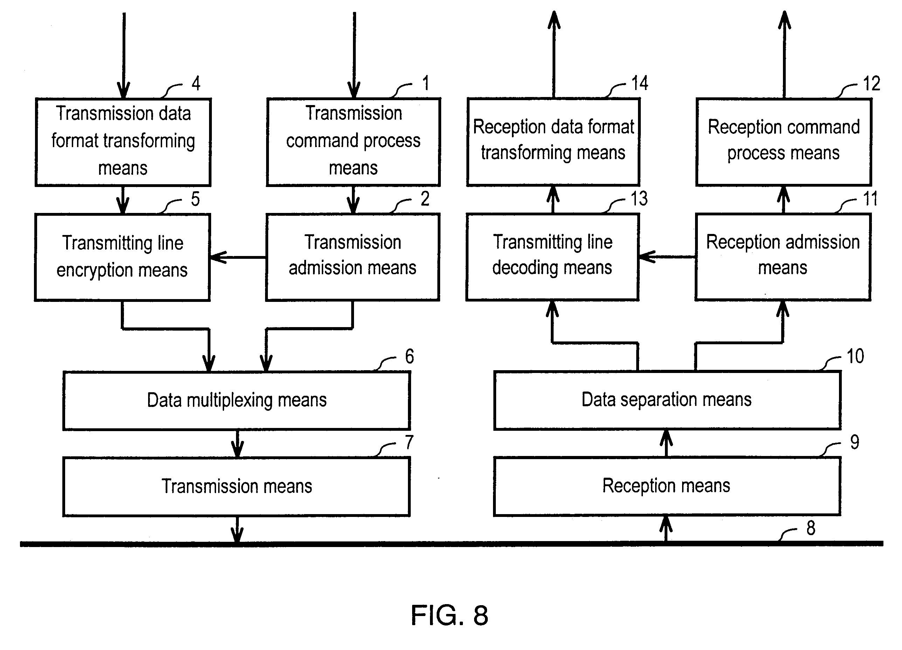

The following description explains one of the prior art concerning the encryption & decryption apparatus by referring to Fig. 8.

When transmitting data onto a network, a transmission command processing means 1 receives a command input comprising a name of receiver, a control command for devices, etc. and then transforms the command input into control information so that the receiver can understand the command input, at the same time, the transmission command processing means 1 requests a transmission admission means 2 to admit data to be transmitted as well as a transmitting line to be used. The transmission admission means 2, for example, outputs a public key stored in this encryption & decryption apparatus to a transmitting line encryption means 5 as a transmission key for transmitting, and also transforms the control information into an asynchronous transmission data to output the asynchronous transmission data to a data multiplexing means 6.

Transmission data comprising video data and audio data, etc. on the other hand, is transformed into synchronous transmission data written in a data format of the transmitting line by a transmission-data-format-transforming means 4, and is tapped off from the transmitting line encryption means 5. The transmitting line encryption means 5 encrypts this synchronous transmission data into encrypted synchronous transmission data by using the transmission key for transmitting, and then transmits it to the data multiplexing means 6.

The data multiplexing means 6 multiplexes the asynchronous transmission data as well as the encrypted synchronous transmission data with a time division means or the like, and a transmission means 7 transmits this data to the transmitting line.

When receiving data from the network, a reception means 9 receives data through the transmitting line 8, then separates the data which has been processed in time-division-multiplex system with a data separation means 10, and produces encrypted synchronous reception data as well as asynchronous reception data.

A reception admission means 11 extracts the control information from the asynchronous reception data, and outputs the control information to transmitting line decryption means by using a secret key stored in this apparatus as a reception key for transmitting. The received control information is processed by a reception command processing means 12, and produces an effective command in this apparatus.

A transmitting line decryption means 13 receives the reception key for transmitting from the reception admission means 11, and decrypts the encrypted synchronous reception data with this reception key for transmitting, and produces synchronous reception data. A reception data format transforming means transforms a format of the synchronous reception data, and produces reception data.

As explained above, a conventional encryption & decryption apparatus encodes data by using the transmitting line encryption means so that information to be transmitted may be veiled to the devices other than the receiver on the network. However, according to the above structure, the strength of encryption depends on the transmitting line encryption means, and it cannot be changed depending on the content of data to be transmitted or received.

### Summary of the Invention

A purpose of the present invention is to provide an encryption apparatus, a decryption apparatus, and an encryption & decryption apparatus which can change the strength of encryption depending on the content of data to be transmitted or received as well as change an encryption method flexibly depending on a compression method of data.

In order to realize the above purpose, the encryption & decryption apparatus of the present invention comprises the following members:
1. Data encryption means for encrypting transmission data by using a data transmission key,
2. Transmission-data-format-transforming means for transforming encrypted transmission data produced by the data encryption means into synchronous transmission data having a data format for transmitting,
3. Transmitting line encryption means which encrypts the synchronous transmission data to produce encrypted synchronous transmission data by using a transmission key for transmitting,
4. Transmitting line decryption means which decrypts the encrypted synchronous reception data by using a reception key for transmitting,
5. Reception-data-format-transforming means for transforming a format of the synchronous reception data tapped off from the transmitting line decryption means to produce encrypted reception data, and
6. Data decryption means for decrypts the encrypted reception data by using a data reception key to produce reception data.
   The encryption & decryption apparatus of the present invention thus can encrypt data appropriately depending on a content or a type of the data, and also encrypt highly secret data with a deeper strength.
   The transmission key for data includes not only a control key for a charge, etc. but also a key indicating an encryption method and a decryption key corresponding thereto.
   The above encryption & decryption apparatus further comprises the following members:
7. A transmission admission means, which is linked with the data encryption means and the transmitting line encryption means, for admitting data transmission as well as producing the transmission key for data responsive to the data content,
   and data to be transmitted is encrypted by the data encryption means using the transmission key for data tapped off from the transmission admission means,
8. A reception admission means, which is linked with the data decryption means and transmitting line decryption means, for admitting data reception as well as producing the reception key for data corresponding to the transmission key for data,
   and encrypted reception data is decrypted by the data decryption means using the reception key for data. The encryption & decryption apparatus can appropriately encrypt data to be transmitted or received by using a data key responsive to a content or type thereof, and thereby can encrypt a highly confidential data with a deeper strength to protect it with ease.

Another encryption & decryption apparatus for the above purpose comprises the following members:
1. A plurality of data encryption means which encrypts transmission data by using the transmission key for data,
2. A plurality of transmission-data-format-transforming means for transforming encrypted transmission data produced by each of the data encryption means into synchronous transmission data having a data format for transmitting line,
3. Transmitting line encryption means which encrypts synchronous transmission data to produce encrypted synchronous transmission data by using a transmission key for transmitting,
4. Transmitting line decryption means which decrypts the encrypted synchronous reception data by using a reception key for transmitting,
5. A plurality of reception-data-format-transforming means for transforming a format of the synchronous reception data tapped off from the transmitting line decryption means to produce encrypted reception data, and
6. A plurality of data decryption means for decrypts the encrypted reception data by using a data reception key to produce reception data.
   The encryption & decryption apparatus can appropriately encrypt the data to be transmitted or received depending on various types of data (e.g. data compressed by different methods such as MPEG, DV format. Etc.) independently, and also can flexibly change a strength of encryption to a plurality of data.
   The above encryption & decryption apparatus further comprises the following members:
7. A transmission admission means, which is linked with a plurality of data encryption means and the transmitting line encryption means, for admitting data transmission as well as producing the transmission key for data responsive to the input data to each data encryption means, which data are coded in various ways, and data to be transmitted is encrypted by the data encryption means using the transmission key for data tapped off from the transmission admission means,
8. A reception admission means, which is linked with the transmitting line decryption means and a plurality of data decryption means, for admitting data reception as well as producing the reception key for data corresponding to the transmission key for data,
   and encrypted reception data is decrypted by each of the data decryption means using the reception key for data, thereby producing reception data. The encryption & decryption apparatus can thus appropriately encrypt data to be transmitted or received by using a data key responsive to a content or type thereof, and thereby can encrypt a highly confidential data with a deeper strength to protect it at a high speed.

Still another encryption & decryption apparatus for the above purpose comprises the following members:
1. Data encryption means for encoding transmission data by using a data transmission key,
2. Transmission data format transforming means for transforming encrypted transmission data produced by the data encryption means into synchronous transmission data having a data format for communication,
3. Transmitting line encryption means which encodes the synchronous transmission data to produce encrypted synchronous transmission data by using a transmission key for transmitting,
4. Transmitting line decoding means which decodes the encrypted synchronous reception data by using a reception key for transmitting,
5. Reception data format transforming means for transforming a format of the synchronous reception data tapped off from the transmitting line decoding means to produce encrypted reception data, and
6. Data decoding means for decodes the encrypted reception data by using a data reception key to produce reception data.
When transmission data and reception data are AV (audio & video) data, this apparatus can encrypt each individual AV data with an appropriate veil responsive to a confidentiality thereof, and making a decision depending on a data compression method of each video data, thereby realizing a simple encryption process.

A device linked in a network having a reception key for transmitting but without a reception key for data, for example, can easily encrypt a desirable video, which is hard to identify but roughly understandable what the video shows, responsive to its compression method by employing an appropriate encryption method with a reception key for data which meets a purpose. In a way of answering a purpose, this apparatus also can encrypt AV data, which is recorded from a TV (television) broadcasting into a VCR (video cassette recorder), when the recorded AV data is played back with the VCR. Thus, a copyright can be protected, and charges also can be properly billed.

When video data is transformed into progressive video data in a non-interlace mode, high quality video data can be displayed with ease on a display device of a personal computer, at the same time, this apparatus can encrypt the progressive video data appropriately for charges with ease. When a personal computer is linked in a network without a reception key for data, this apparatus can encrypt the progressive video data against possible pirate and modification so that the progressive video data may not be decrypted, thereby increasing security of transmission/reception data.

When the transmission key for data and the reception key for data are transmitted and received as a part of the encrypted transmission data and the encrypted reception data, and the transmitting line is encrypted by using the transmission and reception keys for transmitting, this apparatus can encrypt the transmission data as well as reception data appropriately with ease ensuring the security of the transmitting line.

### Brief Description of the Drawings

Fig. 1 is a block diagram of an encryption & decryption apparatus used in Exemplary Embodiment 1.

Fig. 2 is a block diagram of the encryption & decryption apparatus employing a transmission/reception admission means used in Exemplary Embodiment 1.

Fig. 3 is a block diagram of an encryption apparatus employing a transmission/reception admission means used in Exemplary Embodiment 1.

Fig. 4 is a block diagram of a decoding apparatus employing a transmission/reception admission means used in Exemplary Embodiment 1.

Fig. 5 is a block diagram of the encryption & decryption apparatus transmitting/receiving a data reception key with synchronous data.

Fig. 6 is a block diagram of an encoding part of an encryption & decryption apparatus used in Exemplary Embodiment 2.

Fig. 7 is a block diagram of a decoding part of the encryption & decryption apparatus used in Exemplary Embodiment 2.

Fig. 8 is a block diagram depicting a conventional encryption/decryption apparatus.

### Denotations of the Drawings

1. transmission command process means
2. transmission admission means
3. data encryption means
4. transmission data format transforming means
5. transmitting line encryption means
6. data multiplexing means
7. transmission means
8. transmitting line
9. reception means
10. data separation means
11. reception admission means
12. reception command process means
13. transmitting line decoding means
14. reception data format transforming means
15. data decoding means

### Detailed Description of the Preferred Embodiments

Exemplary embodiments are explained by referring to the drawings.

### Exemplary Embodiment 1

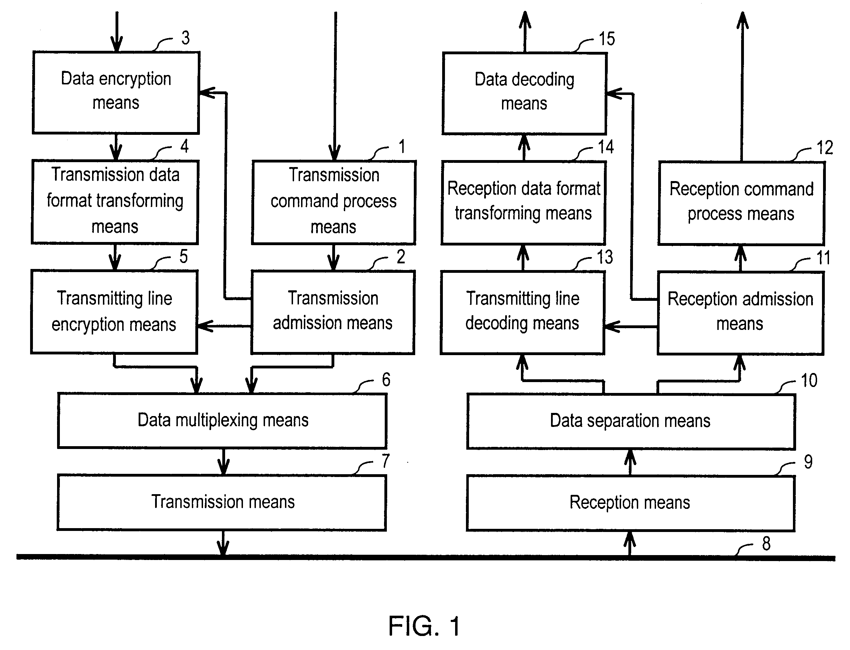

Fig. 1 is a block diagram of an encryption & decryption apparatus used in Exemplary Embodiment 1 according to the present invention. The same elements of Fig. 1 used in a prior art are identically denoted with those of the prior art, and the descriptions thereof are omitted.

When transmitting data into a network, a transmission command process means 1 receives a command input comprising a receiver, a device control command, etc., and then transforms this command input into control information understandable to the receiver, at the same time, the transmission command process means 1 requests a transmission admission means 2 to admit data to be transmitted as well as a transmitting line to be used. The device control command is, e.g. control information such as playback, search, etc., when incorporating this apparatus into a VCR or a LASER disc player. This encryption & decryption apparatus transforms such information into codes specified between this apparatus and a receiving device, and then outputs the codes to the transmission admission means 2.

The transmission admission means 2 outputs the receiver's public key stored in this encryption & decryption apparatus to a transmitting line encryption means 5 as a transmission key for transmitting, and also outputs a public key for transmission data to a data encryption means 3 as a transmission key for data. At the same time, the transmission admission means 2 outputs the control information tapped off from the transmission command process means 1 to a data multiplexing means 6 as asynchronous transmission data. It is not necessarily to use the public key for data transmission as the transmission key for data, as well as not necessarily to use the receiver's public key as the transmission key for transmitting. There are several alternatives as follows:
1. Before transmitting data such as video data, an encrypting key may be obtained at the transmission admission means 2 from the receiver through transmitting / receiving asynchronous data
2. Use the secret key produced by random numbers and the secret key stored m this encryption & decryption apparatus as an encrypting key, and transmit the public key corresponding to this produced public key exclusively to the receiver in the form of asynchronous data.
3. Provide a common key to plural devices of a receiver, and use the public key or the secret key of this common key for encryption.
4. Receive the secret key or the public key from the receiver in the form of asynchronous data, and use this key as the transmission key for data.
5. Through communication in asynchronous data format between the transmitter and the receiver, the secret key or the public key is agreed upon between them, and either one of the key may be used as the transmission key for data.

Further to the above alternatives, the transmission key for data as well as a reception key for data may be received through the transmission line such as a TV broadcasting using a ground wave), CATV, a digital TV broadcasting, a digital satellite broadcasting, and a telephone line. For instance, AV data is encrypted with the received transmission key for data when recording the AV data from the TV broadcasting into a VCR, or playing back the AV data with the VCR, and the AV data is decrypted with a reception key for data stored in a smart-card put in a display devices linked on the transmitting line, or with a reception key for data received through a telephone line.

In the above description, the secret key and the public key are used in encryption; however, encryption/decryption may be done with one key.

A data encryption means 3, on the other hand, encrypts AV (audio & video) data (= transmission data) to be transmitted using a transmission key for data which is received from the transmission admission means 2, and produces encrypted transmission data. This encryption method is developed based on various scramble methods, and can change a strength of encryption responsive to a content of data, or a degree of confidentiality of data.

Next, a transmission-data-format-transforming means 4 transforms the encrypted transmission data into synchronous transmission data in a data format, and outputs it to a transmitting line encryption means 5. The transmission data in this context is, e.g. in the form of DV data used in a digital VCR, or MPEG data. The synchronous transmission data is, e.g. written in the form of an isochronous packet specified by IEEE1394-1995.

The transmitting line encryption means 5 encrypts the synchronous transmission data with a transmission key for transmitting which is tapped off from the transmission admission means 2, and outputs to a data multiplexing means 6 as encrypted synchronous transmission data.

The data multiplexing means 6 multiplexes asynchronous transmission data into an asynchronous packet, and encrypted synchronous data into the isochronous packet by using, e.g. a method specified by IEEE1394-1995. When a transfer rate of the asynchronous data has enough room, the asynchronous data can be multiplexed by a time division method, and can be transmitted as the asynchronous packet.

A transmission means 7 executes a bus arbitration of a transmitting line 8 in order to obtain a right of using the bus, and transmits the asynchronous packet to the receiver. At the same time, the transmission means 7 transmits the isochornous packet according to, e.g. a protocol of IEEE1394-1995 to the receiver periodically.

When receiving the data from the network, a reception means 9 receives, e.g. the asynchronous packet and the isochronus packet addressed to the reception means 9 from the transmitting line 8, and separates the multiplexed data with a data separation means 10, thereby acquiring asynchronous reception data from the asynchronous packet as well as encrypted synchronous data from the isochronous packet.

A reception admission means 11 extracts the control information from the asynchronous reception data, and outputs the secret key stored in this apparatus to a transmitting line decryption means 13 as the reception key for transmitting, also outputs the secret key for data reception to a data decryption means 15 as a reception key for data. The received control information is processed by a reception command processing means 12, and an effective command is produced in this apparatus. In this context, the reception key for transmitting and the reception key for data are not necessarily the secret keys. The same alternatives described in the section of the transmission admission means 2 are also available for those two keys.

The transmission line decryption means 13 receives the reception key for transmitting from the reception admission means 11, and decrypts the encrypted synchronous reception data with the reception key for transmitting to produce synchronous reception data.

A reception-data-format-transforming means 14 transforms a format of the synchronous reception data to produce encrypted reception data, where the synchronous transmission data is, e.g. in the isochornous packet form specified by IEEE1394-1995, and the encrypted reception data, e.g. in the form of DV data used in a digital VCR, is encrypted.

A data decryption means 15 decrypts the encrypted reception data with the reception key for data to produce reception data. The reception data is , e.g. DV data used in the digital VCR. Thus, an output signal tapped off from the data decryption means 15 is fed into a DV encoder to get video data in NTSC format, which can be displayed on a TV screen. In this example, video data in NTSC format is used; however, progressive video data in non-interlace mode can be used for producing a high quality video data on a personal computer display with ease. When a personal computer having no reception key for data is linked with the network, and possible pirates as well as modifications are expected, an encryption hard to decrypt can be provided to progressive video data. Thus a security for transmission/reception data is improved.

A further detailed embodiment of each block employed in Embodiment 1 is not illustrated in drawings, but is explained as follows:

The transmission command processing means 1 has two parts; i.e. (1) a transmission-command-producing-part which transforms an internal command of the transmitter into a transmission command and outputs thereof and (2) an admission requesting part which requests an admission of the transmission admission means 2.

The transmission admission means 2 comprises the following three elements; (a) a memory which stores public keys both for data and transmitting, (b) a transmission key notifying part which notifies these public keys responsive to the request from the transmission process means 1 as the transmission key for data and the transmission key for transmitting respectively to the data encryption means 3 and the transmitting line encryption means 5, and (c) an asynchronous data transmitting part which transmits control information of the transmitter received from the transmission command process means 1 to the data multiplexing means 6.

The data encryption means 3 comprises a data encrypting part which encrypts data with the transmission key for data received from the transmission admission means 2 following a pre-determined encryption method.

The transmission-data-format-transforming means 4 comprises a format transforming part which transforms encrypted transmission data into synchronous transmission data in a data format of the transmitting line.

The transmitting line encryption means 5 comprises a transmission encrypting part which encrypts data with the transmission key for transmitting received from the transmission admission means 2 by following a pre-determined encryption method.

The data multiplex means 6 comprises the following three elements; (a) a synchronous packet producing part which transforms asynchronous transmission data into an asynchronous packet, (b) an asynchronous packet producing part shich transforms an encrypted synchronous transmission data into an isochronous packet, and (c) a multiplexing part which multiplexes the asynchronous packet and the isochronous packet.

The transmission means 7 comprises a transmitting part which conducts a bus-arbitration on the transmitting line 8 to obtain a bus-use right, and transfers the asynchronous packet as well as isochronous packet to a receiver with a pre-determined protocol individually.

The reception means 9 comprises a receiving part which receives the asynchronous packet and the isochronous packet addressed to the reception means 9. The reception means 9, of course, can establish a connection between the transmitter.

The data separation means 10 comprises the following three elements: (a) a separating part which separates multiplexed data, (b) an asynchronous packet receiving part which produces asynchronous reception data from the asynchronous packet, (c) a synchronous packet receiving part which receives encrypted synchronous data from the isochronous packet.

The reception admission means 11 comprises the following three elements: (a) a command extracting part which extracts the control information of the transmitter from the asynchronous transmission data received from the data separation means 10 to transmit the control information to the reception command process means 12, (b) a memory which stores a secret key for data and a secret key of the transmitter, (c) a reception key notifying part which notifies these secret keys as a reception key for data and a reception key for transmitting to the data decryption means 15 and the transmitting line decryption means 13 respectively, by responding to requests of asynchronous reception data, synchronous reception data and users of this receiver.

The reception command process means 12 comprises an inner command producing part which receives control information from the reception admission means 11 and produces a command valid within this apparatus.

The transmitting line decryption means 13 comprises a transmission decrypting part which decrypts data with the reception key for transmitting received from the reception admission means 11 following a predetermined decryption means. This decryption method forms a pair with a transmitting-line-encryption method employed in the transmitter, and has been agreed with between the transmitter and receiver.

The data decryption means 15 comprises a data decrypting part which decrypts data with the reception key for data received born the reception admission means 11 by following a pre-determined method. This decryption method forms a pair with a data-encryption-method employed in the transmitter, and has been agreed with between the transmitter and receiver.

As the above embodiment proves, through using the data encryption means, transmitting line encryption means, data decryption means, and transmitting line decryption means, encryption responsive to transmission/reception data can be realized. Thus, a deeper strength encryption can be easily provided exclusively to a highly confidential data. As a result, a strength of encryption can be flexibly changed responsive to a content of transfer/reception data.

When using AV data (audio & video) as transmission/reception data, a video of "pay per view" is encrypted so that the video can be roughly imaged what it shows but cannot be exactly identified. As such, an encryption method for digital broadcasting can be employed so that a highly confidential video is encrypted with a deeper strength by using a data key responsive to a purpose.

AV data recorded from a TV broadcasting or the like into a VCR, etc. can be encrypted when the AV data is played back with a VCR, etc., therefore, with regard to any display devices linked with the transmitting line, a copyright of the AV data is protected and also a charge can be billed.

Further, independent of encrypting a transmitting line, a content provider, e.g., can encrypt a content with its original method. Therefore, the content provider can flexibly protect a copyright or bill a charge on each content independently to a receiver who views and listens to AV data through a display device linked with a transmitting line. The content provider also can bill a charge when playing back a recorded content with a VCR, etc.

In this embodiment, a data transmitter comprising the data encryption means, etc. and a data receiver comprising the data decryption means, etc. are incorporated into one apparatus. However, if the transmission key for data and the reception key for data are pre-determined, an exclusive apparatus of video playback, for example, may incorporate only the data transmitter comprising the transmission command process means, transmission admission means, data encryption means, transmission-data-format-transforming means, transmitting line encryption means, data multiplexing means, and transmission means. In the case of an apparatus receiving only video data such as a monitor, the apparatus may only incorporate the data receiver comprising the reception command process means, reception admission means, data decryption means, reception-data-format-transforming means, transmission line decryption means, data separation means, and reception means.

In this embodiment, AV data comprising audio data and video data is used as the transmission/reception data; however, various confidential data, e.g. text data and chart data can be used with expecting the same result as obtained for AV data.

Every means described in this embodiment except the transmission means and a transmitting line driving circuit of the reception means, etc. can be executed in the form of software with expecting the same result.

Further, the data multiplexing means and transmission means can be combined into one means. The data separation means and reception means can be also combined into one means. Both can obtain the same result as the above embodiment can get.

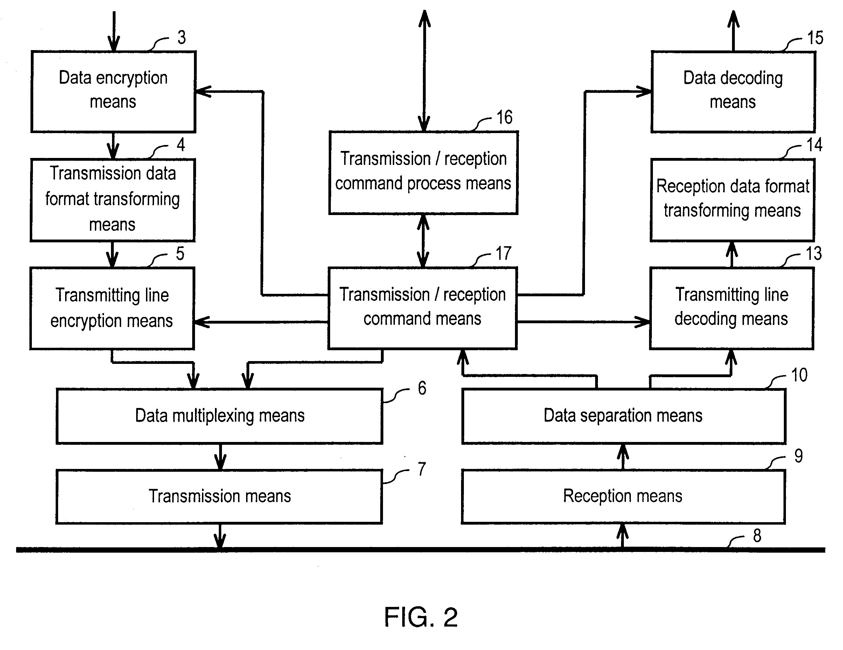

Fig. 2 is a block diagram where the above embodiment is carried out by using a transmission/reception command process means 16 substituting for the transmission command process means 1 and the reception command process means 12, and a transmission/reception command means 17 substituting the transmission admission means 2 and the reception admission means 11.

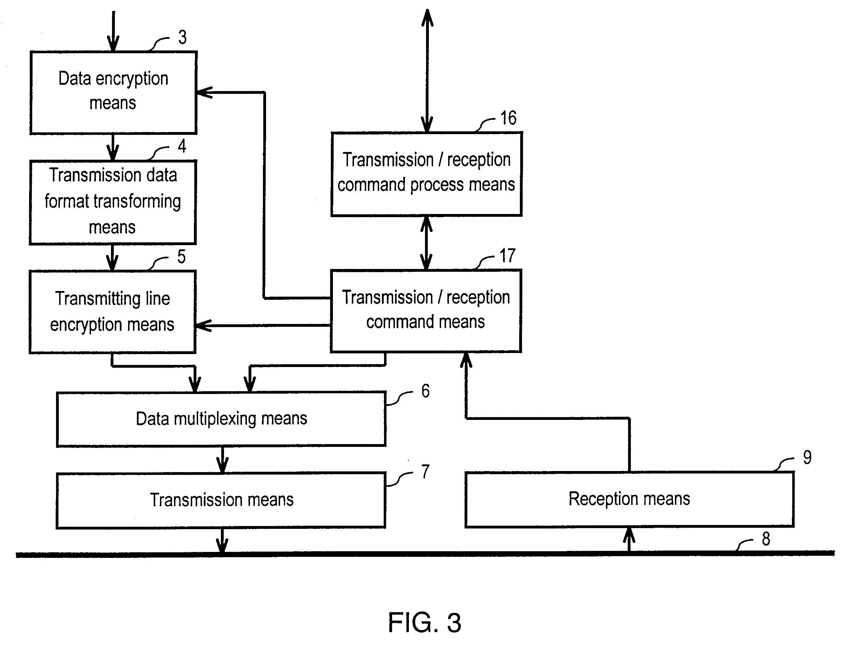

This structure shown in Fig. 3 makes it easier to communicate asynchronous data between the transmitter and the receiver, in particular, admissions of transmission and reception as well as controls of devices required for transmission/reception of asynchronous data, thereby accommodating a case flexibly where various devices are linked to a transmitting line 8. For example, the following jobs can be done with ease when employing this structure: (1) A secret key or a public key is received from the receiver in the form of asynchronous data, and an encryption is done by using this received key as a transmission key for data. (2) A secret key or a public key is agreed upon between the transmitter and the receiver through asynchronous data communication, and an encryption is done by using one of these keys as a transmission key for data.

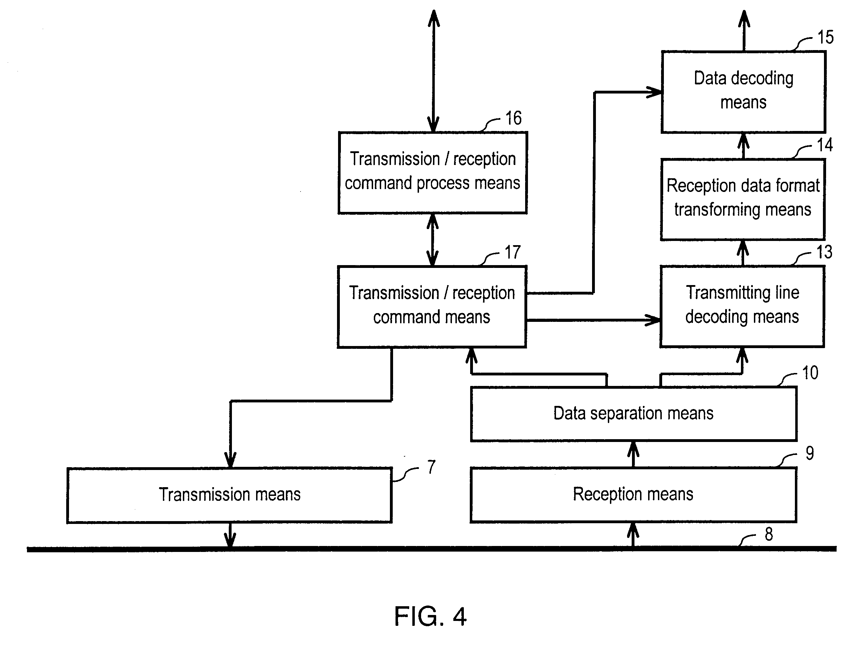

In this embodiment, the data transmitter comprising the data encryption means, etc., and the data receiver comprising the data decryption means, etc. are incorporated into one apparatus; however, as shown in Fig. 3, in a playback device exclusive for video, only an encryption apparatus is necessary and it may be made of only the following two elements: (1) a data transmitter comprising a transmission/reception command process means 16, transmission/reception admission means 17, data encryption means 3, transmission-data-format-transforming means 4, transmitting line encryption means 5, data multiplexing means 6, and a transmission means 7, and (2) the reception means 9 for asynchronous data which is coupled with the transmission/reception admission means 17. Regarding a decryption apparatus, as shown in Fig. 4, in a monitor device which exclusively receives video data, only a decryption apparatus is required and it may be made of also only the following two elements: (1) a data receiver comprising the transmission/reception command process means 16, transmission/reception admission means 17, data decryption means 15, reception-data-format-transforming means 14, transmission line decryption means 13, data separation means 10, and the reception means 9, and (2) the transmission means 7 for asynchronous data coupled with the transmission/reception admission means 17.

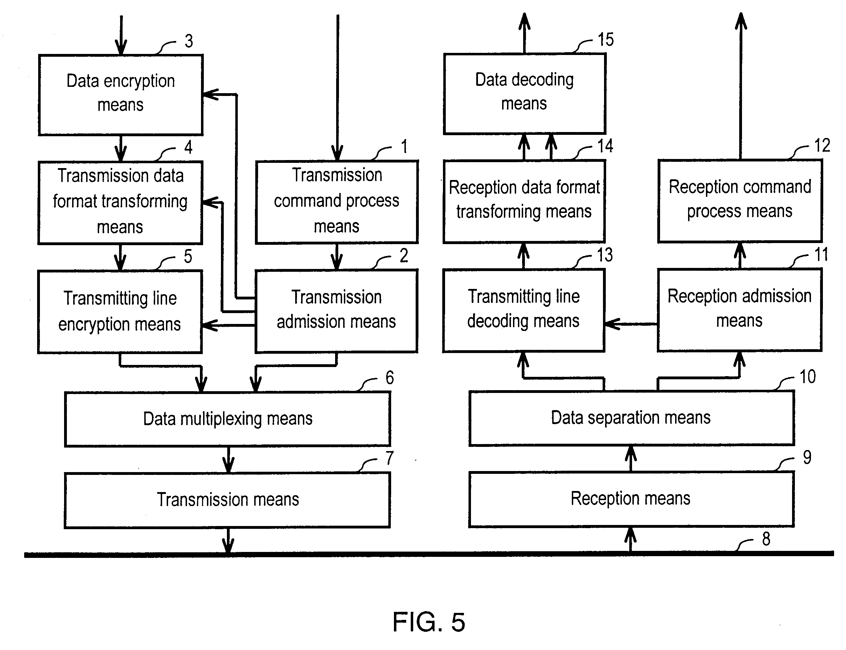

Fig. 5 depicts a modified case of this embodiment, where the transmission key for data is transmitted together with synchronous transmission data, and then the reception key for data is received together with synchronous reception data.

First, the transmission admission means 2 outputs, e.g. the public key of the receiver stored in this apparatus to the transmission line encryption means 5 as the transmission key for transmitting, and also outputs the public key of transmission data to the data encryption means 3 as the transmission key for data. At the same tune the transmission admission means 2 outputs the secret key for transmission data to the transmission-data-format-transforming means 4 as the reception key for data In this modified case, it is not necessarily to use the public key and secret key for transmission data as the transmission key for data and the reception key for data respectively, and instead, a secret key produced by a secret key and random numbers both stored in this apparatus may be used as the transmission key for data in order to encrypt data , and a public key corresponding to this secret key may be used as the reception key for data. Another alternative is to assign a common key for plural devices on receiver's side, and the public key and the secret key of this common key may be used as the transmission key for data and the reception key for data respectively. In this modified case, an encryption is explained by using the secret key and the public key; however, both encryption and decryption may be carried out by one single key, where an identical key is used for data output both to the data encryption means 3 and the transmission-data-format-transforming means 4.. Structuring the apparatus as above makes it possible to handle the reception key for data with ease, and to realize an appropriate encryption responsive a type of transmission/reception data with securing confidentiality of the transmission line.

Next, the transmission-data-format-transforming means 4 transforms encrypted transmission data which is tapped off from the data encryption means 3, and the reception key for data into synchronous transmission data in a data format of the transmission line, and then outputs them to the transmission line encryption means 5. On the other hand, the reception-data-format-transforming means 14 transforms the format to extract encrypted reception data as well as the reception key for data. Then, the data decryption means 15 decrypts the encrypted reception data by using this reception key for data to produce reception data. Structuring the apparatus as above makes it possible not to retain the reception key for data in the apparatus, thereby simplifying the structure and securing safety of the transmission line by encrypting thereof.

### Exemplary Embodiment 2

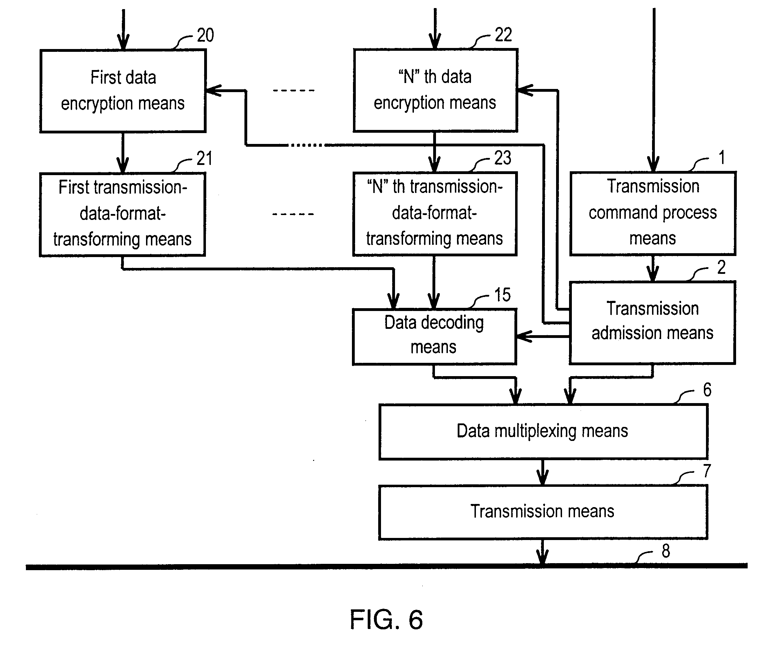

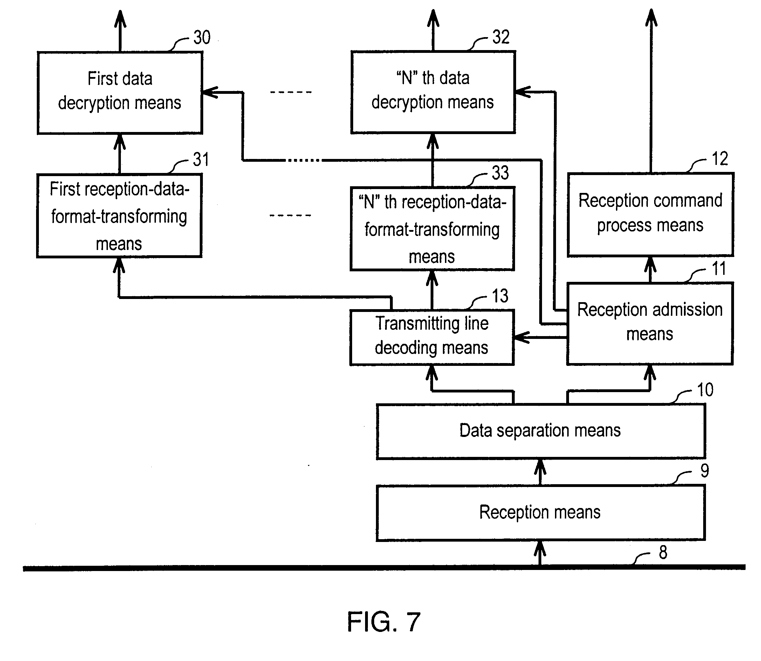

Fig. 6 and Fig. 7 are block diagrams depicting an encryption & decryption apparatus used in Embodiment 2 according to the present invention. The same elements used in Embodiment 1 bear identical denotes in Embodiment 2, and descriptions thereof are omitted. In Fig. 6, a "N"th data decryption means 32 and "N"th reception-data-format-transforming means 33 are used, where "N" is a natural number, and "N" represents that there are a number of data decryption means as well as transmission-data-format-transforming means. In this embodiment, two data encryption means are employed, namely, a first and the "N"th ones. (e.g. an encryption means is assigned to each different compression encoding method, such as MPEG data, and DV format data.) When any arbitrary number of data encryption means are employed instead of two as this case, the same result can be expected with the same method used in this Embodiment.

First, in the case of transmitting data onto a network, the transmission admission means 2 outputs the receiver's public key stored in this apparatus to the transmitting line encryption means 5, a public key for the first stream data to the first data encryption means 20 as the transmission key for data, a public key of the "N"th transmission data to the "N"th data encryption means 22 as the "N"th transmission for data, and at the same time, the transmission admission means 2 outputs control information received from the transmission command process means 1 to the data multiplexing means 6 as asynchronous transmission data. The first and the "N"th transmission keys for data may be different or may be the same. (When different compression encoding methods are employed, and an almost identical circuit form can accommodate both the compression methods, e.g. MPEG method and motion JPEG method, both the transmission keys for data may be identical.) As explained in Embodiment 1, it is not necessarily to use the public key for data transmission as the transmission key for data, as well as not necessarily to use the receiver's public key as the transmission key for transmitting. There are several alternatives as follows:
1. Before transmitting data such as video data, an encrypting key may be obtained at the transmission admission means 2 from the receiver through transmitting / receiving asynchronous data
2. Use the secret key produced by random numbers and the secret key stored in this encryption & decryption apparatus as an encrypting key, and transmit the public key corresponding to this produced public key exclusively to the receiver in the form of asynchronous data.
3. Provide a common key to plural devices of a receiver, and use the public key or the secret key of this common key for encryption.
4. Receive the secret key or the public key from the receiver in the form of asynchronous data, and use this key as the transmission key for data.
5. Through communication in asynchronous data format between the transmitter and the receiver, the secret key or the public key is agreed upon between them, and either one of the key may be used as the transmission key for data.

Further to the above alternatives, the transmission key for data as well as a reception key for data may be received through the transmission line such as a TV broadcasting using a ground wave), CATV, a digital TV broadcasting, a digital satellite broadcasting, and a telephone line. For instance, AV data is encrypted with the received transmission key for data when recording the AV data from the TV broadcasting into a VCR, or playing back the AV data with the VCR, and the AV data is decrypted with a reception key for data stored in a smart-card put in a display devices linked on the transmitting line, or with a reception key for data received through a telephone line.

In the above description, the secret key and the public key are used in encryption; however, encryption/decryption may be done with one key.

On the other hand, the first data encryption means 20 and the "N"th data encryption means 22 encrypt data to be transmitted with the transmission key for data received from the transmission admission means 2 to produce encrypted transmission data, where the data to be transmitted comprises video data and audio data. A first transmission data is fed into the first data encryption means 20, and the "N"th transmission data is fed into the "N"th data encryption means 22.

For instance, the first transmission data would be DV data used in a digital VCR, and the "N"th transmission data would be MPEG data used in a digital satellite broadcasting. The first data encryption means 20 encrypts all frames by using the first transmission key for data through the same encryption method. The "N"th data encryption means 22 encrypts only one frame of the MPEG data by using the "N"th transmission key for data. The first data encryption means 20 and the "N"th data encryption means 22, of course, may employ the same encryption method.

Next, a first transmission-data-format-transforming means 21 and a "N"th transmission-data-format-transforming means 23 transform the encrypted transmission data into a first synchronous transmission data and a "N"th synchronous transmission in a data format of the transmission line, and output the transformed data to the transmitting line encryption means 5. The synchronous transmission data is written, e.g. in an isochronous packet format specified by IEEE1394-1995.

The transmitting line encryption means 5 encrypts those synchronous transmission data with the transmission key for transmitting tapped off from the transmission admission means 2, and otuputs them to the data multiplexing means 6 as encrypted synchronous transmission data.

Using a method specified IEEE1394-1995 for example, the data multiplexing means 6 multiplexes asynchronous data in the form of asynchronous packet, as well as the encrypted synchronous transmission data in the form of isochronous packet.

A transmission means 7 executes a bus arbitration of a transmitting line 8 in order to obtain a right of using the bus, and transmits the asynchronous packet to the receiver. At the same time, the transmission means 7 transmits the isochornous packet according to, e.g. a protocol of IEEE1394-1995 to the receiver periodically.

When receiving the data from the network, a reception means 9 receives, the asynchronous packet and the isochronus packet addressed to the reception means 9 from the transmitting line 8, and separates the multiplexed data with a data separation means 10, thereby acquiring asynchronous reception data from the asynchronous packet as well as encrypted synchronous data from the isochronous packet.

A reception admission means 11 extracts the control information from the asynchronous reception data, and outputs the secret key stored in this apparatus to a transmitting line decryption means 13 as the reception key for transmitting, also outputs the secret key for data reception to a data decryption means 30, 33 as a reception key for data respectively. The received control information is processed by a reception command processing means 12, and an effective command is produced in this apparatus. In this context, the reception key for transmitting and the reception key for data are not necessarily the secret keys. The same alternatives described in the section of the transmission admission means 2 are also available for those two keys.

The transmission line decryption means 13 receives the reception key for transmitting from the reception admission means 11, and decrypts the encrypted synchronous reception data with the reception key for transmitting to produce synchronous reception data.

A first reception-data-format transforming means 31 and a "N"th reception-data-format transforming means 33 transform a format of synchronous reception data, and produce a first encrypted reception data and a "N"th encrypted reception data respectively. For example, the first encrypted reception data may be an encrypted data of DV data format, and the "N"th encrypted reception data may be an encrypted data of MPEG data format. The synchronous transmission data may be, for example, an isochronous packet format specified by IEEE1394-1995.

A first data decryption means 30 and a "N"th data decryption means 32 decrypt the encrypted reception data with a reception key for first reception data and with a reception key for "N"th reception data to produce a first reception data and "N"th reception data respectively, where the reception key for first data corresponds to the transmission key for first data, and the reception key for "N"th data corresponds to the transmission key for "N"th data. As a result, the first reception data may be DV data, and the "N"th reception data may be MPEG data. Those reception data are fed to a DV encoder and a MPEG encoder respectively with a desirable time interval to produce video data, which can be displayed on the monitor. The video data may be progressive video data in a non-interlace method so that the video data can be displayed on a display device of a personal computer as high quality video data. An encryption necesssary for charges of the progressive video data thus can be realized appropriately with ease. When a personal computer having no reception key for data is linked to the network, and it may be happened that a user of this personal computer pirates and modifies the data, an encryption through which the data is difficult to read can be available. A transmission/reception data is thus protected with high security.

As explained above, according to Exemplary Embodiment 2, an encryption responsive to stream data can be realized by using plural data encryption means, and plural transmission-data-transforming means, and a transmission line encryption means, e.g., compressed video data by the DV format or by the MPEG data is appropriately encrypted. Video information requiring concealment can be thus encrypted with ease responsive to a compression method of each video data. For instance, a device, which has a reception key for transmitting but does not have a reception key for data, is linked with a network, and through this device a user can watch a video not exactly but even roughly though hard to see. In such a case, the video can be encrypted independently of a video compression method.

In this embodiment, the plural transmission-data-format-transforming means are to be coupled with the data multiplexing means; however, the plural transmission-data-format-transforming means may be changed with a switch, and one of the plural means is selected to couple with the data multiplexing means. The switching may be controlled by the transmission command process means or the transmission admission means. Through this method, the same result as that of the above embodiment can be expected. This method can be also applied to the plural reception-data-formattransforming means.

In this embodiment, a data transmitter comprising the data encryption means, etc. and a data receiver comprising the data decryption means, etc. are incorporated into one apparatus. However, if the transmission key for data and the reception key for data are pre-determined, an exclusive apparatus of video playback, for example, may incorporate only the data transmitter comprising the transmission command process means, transmission admission means, the first data encryption means, the "N"th data encryption means, the first transmission-data-format-transforming means, the "N"th transmission-data-format-transforming means, the transmitting line encryption means, the data multiplexing means, and the transmission means. In the case of an apparatus receiving only video data such as a monitor, the apparatus may only incorporate the data receiver comprising the reception command process means, reception admission means, the first data decryption means, the "N"th data decryption means, the first reception-data-format-transforming means, the "N"th reception-data-format-transforming means, the transmission line decryption means, the data separation means, and the reception means.

Every means described in this embodiment except transmission means and transmitting line driving circuit of the reception means, etc. can be executed in the form of software with expecting the same result.

Further, the data multiplexing means and transmission means can be combined into one means. The data separation means and reception means can be also combined into one means. Both can obtain the same result as the above embodiment can get.

As same as shown in Fig. 2, this embodiment is carried out by using a transmission/reception command process means 16 substituting for both the transmission command process means 1 and the reception command process means 12, and a transmission/reception command means 17 substituting for both the transmission admission means 2 and the reception admission means 11. For example, the following jobs can be done with ease when employing this structure: (1) A secret key or a public key is received from the receiver in the form of asynchronous data, and an encryption is done by using this received key as a transmission key for data. (2) A secret key or a public key is agreed upon between the transmitter and the receiver through asynchronous data communication, and an encryption is done by using one of these keys as a transmission key for data.

In this embodiment, the data transmitter comprising the first data encryption means, etc., and the data receiver comprising the first data decryption means, etc. are incorporated into one apparatus; however, as shown in Fig. 2, in a playback device exclusive for video, only an encryption apparatus is necessary and it may be made of only the following two elements: (1) a data transmitter comprising a transmission/reception command process means 16, transmission/reception admission means 17, first data encryption means 20, "N"th data encryption means 22, first transmission-data-format-transforming means 21, "N"th transmission-data-format-transforming means 23, transmitting line encryption means 15, data multiplexing means 6, and transmission means 7, and (2) the reception means 9 for asynchronous data which is coupled with the transmission/reception admission means 17. Regarding a decryption apparatus, as shown in Fig. 4, in a monitor device which exclusively receives video data, only a decryption apparatus is required and it may be made of also only the following two elements: (1) a data receiver comprising the transmission/ reception command process means 16, transmission/reception admission means 17, first data decryption means 30, "N"th data decryption means 32, first reception-data-format-transforming means 31, "N"th reception-data-format-transforming means 33, transmission line decryption means 13, data separation means 10, and the reception means 9, and (2) the transmission means 7 for asynchronous data coupled with the transmission/reception admission means 17.

As same as shown in Fig. 5, the transmission key for data can be transmitted together with synchronous transmission data, and the reception key for data can be received together with synchronous reception data in this embodiment, thus the reception key for data can be handled with ease, and transmission/reception data can be encrypted in a simple structure with securing a confidentiality of the transmitting line.

## Claims

1. An encryption & decryption apparatus comprising;
(a) transmission command process means for processing a transmission control signal,
(b) transmission admission means for admitting data to be transmitted, which transmission admission means being coupled to said transmission command process means,
(c) data encryption means for encrypting transmission data with a transmission key for data which is tapped off from said transmission admission means,
(d) transmission-data-format-transforming means for transforming encrypted transmission data produced by said data encryption means into synchronous transmission data having a data format of transmission line,
(e) transmission line encryption means for producing an encrypted synchronous transmission data by encrypting said synchronous transmission data with a transmission key for transmitting tapped off from said transmission admission means,
(f) data multiplexing means for multiplexing said encrypted synchronous transmission data and asynchronous transmission data tapped off from said transmission admission means,
(g) transmission means for transmission data for transmitting which is tapped off from said data multiplexing means onto a transmitting line,
(h) reception means for receiving reception data for transmitting from the transmitting line,
(i) data separation means for separating said reception data for transmitting into encrypted synchronous reception data and asynchronous reception data,
(j) reception admission means for admitting data to be received, which reception admission means being coupled with said data separation means
(k) reception command process means for processing a reception control signal tapped off from said reception admission means,
(l) transmitting line decryption means for decrypting said encrypted synchronous reception data with a reception key for transmitting which is tapped off from said reception admission means,
(m) reception-data-format-transforming means for producing encrypted reception data by transforming a format of synchronous reception data which is tapped off from said transmitting line decryption means, and
(n) data decryption means for producing reception data by decrypting said encrypted reception data with a reception key for data which is tapped off from said reception admission means.

2. An encryption apparatus comprising:
(a) transmission command process means for processing a transmission control signal,
(b) transmission admission means for admitting data to be transmitted, which transmission admission means being coupled to said transmission command process means,
(c) data encryption means for encrypting transmission data with a transmission key for data which is tapped off from said transmission admission means,
(d) transmission-data-format-transforming means for transforming encrypted transmission data produced by said data encryption means into synchronous transmission data having a data format of transmission line,
(e) transmission line encryption means for producing an encrypted synchronous transmission data by encrypting said synchronous transmission data with a transmission key for transmitting tapped off from said transmission admission means,
(f) data multiplexing means for multiplexing said encrypted synchronous transmission data and asynchronous transmission data tapped off from said transmission admission means, and
(g) transmission means for transmitting transmission data for transmitting which is tapped off from said data multiplexing means onto a transmitting line.

3. A decryption apparatus comprising;
(a) reception means for receiving reception data for transmitting from the transmitting line,
(b) data separation means for separating said reception data for transmitting into encrypted synchronous reception data and asynchronous reception data,
(c) reception admission means for admitting data to be received, which reception admission means being coupled with said data separation means
(d) reception command process means for processing a reception control signal tapped off from said reception admission means,
(e) transmitting line decryption means for decrypting said encrypted synchronous reception data with a reception key for transmitting which is tapped off from said reception admission means,
(f) reception-data-format-transforming means for producing encrypted reception data by transforming a format of synchronous reception data which is tapped off from said transmitting line decryption means, and
(g) data decryption means for producing reception data by decrypting said encrypted reception data with a reception key for data which is tapped off from said reception admission means.

4. An encryption & decryption apparatus comprising:
(a) transmission command process means for processing a transmission control signal, (b) transmission admission means for admitting data to be transmitted, which transmission admission means being coupled to said transmission command process means,
(c) a plurality of data encryption means for encrypting transmission data with a transmission key for data which is tapped off from said transmission admission means,
(d) a plurality of transmission-data-format-transforming means for transforming encrypted transmission data produced by said plurality of data encryption means into synchronous transmission data having a data format of transmission line,
(e) transmission line encryption means for producing an encrypted synchronous transmission data by encrypting said synchronous transmission data with a transmission key for transmitting tapped off from said transmission admission means,
(f) data multiplexing means for multiplexing said encrypted synchronous transmission data and asynchronous transmission data tapped off from said transmission admission means,
(g) transmission means for transmission data for transmitting which is tapped off from said data multiplexing means onto a transmitting line,
(h) reception means for receiving reception data for transmitting from the transmitting line,
(i) data separation means for separating said reception data for transmitting into encrypted synchronous reception data and asynchronous reception data,
(j) reception admission means for admitting data to be received, which reception admission means being coupled with said data separation means
(k) reception command process means for processing a reception control signal tapped off from said reception admission means,
(l) transmitting line decryption means for decrypting said encrypted synchronous reception data with a reception key for transmitting which is tapped off from said reception admission means,
(m) a plurality of reception-data-format-transforming means for producing encrypted reception data by transforming a format of synchronous reception data which is tapped off from said transmitting line decryption means, and
(n) a plurality of data decryption means for producing reception data by decrypting said encrypted reception data with a reception key for data which is tapped off from said reception admission means.

5. An encryption apparatus comprising:
(a) transmission command process means for processing a transmission control signal,
(b) transmission admission means for admitting data to be transmitted, which transmission admission means being coupled to said transmission command process means,
(c) a plurality of data encryption means for encrypting transmission data with a transmission key for data which is tapped off from said transmission admission means,
(d) a plurality of transmission-data-format-transforming means for transforming encrypted transmission data produced by said plurality of data encryption means into synchronous transmission data having a data format of transmission line,
(e) transmission line encryption means for producing an encrypted synchronous transmission data by encrypting said synchronous transmission data with a transmission key for transmitting tapped off from said transmission admission means,
(f) data multiplexing means for multiplexing said encrypted synchronous transmission data and asynchronous transmission data tapped off from said transmission admission means,
(g) transmission means for transmission data for transmitting which is tapped off from said data multiplexing means onto a transmitting line,

6. A decryption apparatus comprising:
(a) reception means for receiving reception data for transmitting from the transmitting line,
(b) data separation means for separating said reception data for transmitting into encrypted synchronous reception data and asynchronous reception data,
(c) reception admission means for admitting data to be received, which reception admission means being coupled with said data separation means
(d) reception command process means for processing a reception control signal tapped off from said reception admission means,
(e) transmitting line decryption means for decrypting said encrypted synchronous reception data with a reception key for transmitting which is tapped off from said reception admission means,
(f) a plurality of reception-data-format-transforming means for producing encrypted reception data by transforming a format of synchronous reception data which is tapped off from said transmitting line decryption means, and
(g) a plurality of data decryption means for producing reception data by decrypting said encrypted reception data with a reception key for data which is tapped off from said reception admission means.

7. The encryption & decryption apparatus of Claim 1 or Claim 4, or the encryption apparatus of Claim 2 or Claim 5, or the decryption apparatus of Claim 3 or Claim 6 wherein; reception data and transmission data are AV data comprising audio data and video data.

8. The encryption & decryption apparatus, or the encryption apparatus, or the decryption apparatus of Claim 7 wherein; video data is progressive video data.

9. The encryption & decryption apparatus of Claim 1 or 4, or the encryption apparatus of Claim 2 or 5 wherein; the transmission-data-format-transforming means transforms the reception key for data which is tapped off from the transmission admission means and the encrypted transmission data into the synchronous transmission data having the data format of the transmitting line.

10. The encryption & decryption apparatus of Claim 1 or Claim4, or the decryption apparatus of Claim 3 or Claim 6 wherein: the reception-data-format-transforming means produces the encrypted reception data and the reception key for data by transforming the format of synchronous reception data which is tapped off from the transmitting line decryption means, and the data decryption means decrypts said encrypted reception data with the reception key for data which is tapped off from said reception-data-format-transforming means.

11. An encryption & decryption apparatus comprising:
(a) transmission command process means for processing a transmission control signal,
(b) transmission admission means for admitting data to be transmitted, which transmission admission means being coupled to said transmission command process means, and for producing a transmission key for data responsive to content of said data,
(c) data encryption means for encrypting transmission data with said transmission key for data which is tapped off from said transmission admission means,
(d) transmission-data-format-transforming means for transforming encrypted transmission data produced by said data encryption means into synchronous transmission data having a data format of transmission line,
(e) transmission line encryption means for producing an encrypted synchronous transmission data by encrypting said synchronous transmission data with a transmission key for transmitting tapped off from said transmission admission means,
(f) data multiplexing means for multiplexing said encrypted synchronous transmission data and asynchronous transmission data tapped off from said transmission admission means,
(g) transmission means for transmission data for transmitting which is tapped off from said data multiplexing means onto a transmitting line,
(h) reception means for receiving reception data for transmitting from the transmitting line,
(i) data separation means for separating said reception data for transmitting into encrypted synchronous reception data and asynchronous reception data,
(j) reception admission means for admitting data to be received, which reception admission means being coupled with said data separation means, and for producing a reception key for data responsive to said transmission key for data,
(k) reception command process means for processing a reception control signal tapped off from said reception admission means,
(l) transmitting line decryption means for decrypting said encrypted synchronous reception data with a reception key for transmitting which is tapped off from said reception admission means,
(m) reception-data-format-transforming means for producing encrypted reception data by transforming a format of synchronous reception data which is tapped off from said transmitting line decryption means, and
(n) data decryption means for producing reception data by decrypting said encrypted reception data with said reception key for data which is tapped off from said reception admission means.

12. An encryption apparatus comprising:
(a) transmission command process means for processing a transmission control signal,
(b) transmission admission means for admitting data to be transmitted, which transmission admission means being coupled to said transmission command process means, and for producing a transmission key for data responsive to content of said data,
(c) data encryption means for encrypting transmission data with said transmission key for data which is tapped off from said transmission admission means,
(d) transmission-data-format-transforming means for transforming encrypted transmission data produced by said data encryption means into synchronous transmission data having a data format of transmission line,
(e) transmission line encryption means for producing an encrypted synchronous transmission data by encrypting said synchronous transmission data with a transmission key for transmitting tapped off from said transmission admission means,
(f) data multiplexing means for multiplexing said encrypted synchronous transmission data and asynchronous transmission data tapped off from said transmission admission means,
(g) transmission means for transmission data for transmitting which is tapped off from said data multiplexing means onto a transmitting line,

13. A decryption apparatus comprising:
(a) reception means for receiving reception data for transmitting from transmitting line depending on a content of data , said reception data for transmitting including encrypted data by a transmission key for data.
(b) data separation means for separating said reception data for transmitting into encrypted synchronous reception data and asynchronous reception data,
(c) reception admission means for admitting data to be received, which reception admission means being coupled with said data separation means, and for producing a reception key for data responsive to said transmission key for data,
(d) reception command process means for processing a reception control signal tapped off from said reception admission means,
(e) transmitting line decryption means for decrypting said encrypted synchronous reception data with a reception key for transmitting which is tapped off from said reception admission means,
(f) reception-data-format-transforming means for producing encrypted reception data by transforming a format of synchronous reception data which is tapped off from said transmitting line decryption means, and
(g) data decryption means for producing reception data by decrypting said encrypted reception data with said reception key for data which is tapped off from said reception admission means.
